# EUROPEAN PATENT SPECIFICATION

(11) **EP 3 425 250 B1**
(45) Date of publication and mention of the grant of the patent: **17.11.2021**
(21) Application number: 18181793.3
(22) Date of filing: 05.07.2018
(51) Int. Cl.: F16L 19/02

(54) **SEALING INSERT FOR COMPRESSION CONNECTIONS**
DICHTEINSATZ FÜR DRUCKANSCHLÜSSE
INSERT D'ÉTANCHÉITÉ POUR RACCORDS À COMPRESSION

(30) Priority: 05.07.2017 GB 201710795
(43) Date of publication of application: 09.01.2019
(73) Proprietor: Martin, Tim, Wilmslow, Cheshire SK9 2LB (GB)
(72) Inventor: Martin, Tim, Wilmslow, Cheshire SK9 2LB (GB)
(74) Representative: Denmark, James Christopher

(56) References cited:
- DE-A1- 2 623 157
- US-A- 2 529 534
- US-A- 5 192 095

## Description

### Field of the Invention

The present invention relates to a sealing insert for compression connections between fluid conduits. The present invention also relates to a compression connection, or any one of the respective components thereof, within which such a sealing insert is provided, as well as an assembly comprising all such components and the insert within them. More specifically, the present invention relates to a sealing insert for repairing, improving or enhancing any connection between at least a first fluid conduit and a second fluid conduit wherein the connection is intended to provide, as a result of the compression of one or more components of or within said connection, an essentially fluid-tight seal between said conduits but which can commonly fail to do so, or which might initially provide such a seal but over time eventually fail to do so. In particular, the present invention relates to a sealing insert which is intended for repairing defective compression connections between fluid-carrying conduits wherein the seal provided by the connection is imperfect and wherein the nature of the compression connection and the components within it are such that further increasing the compressive force, for example by tightening, can further impair the already damaged seal.

For the avoidance of doubt, within this specification, the term "fluid conduit" is to be understood to mean any component in which fluid is capable of flowing, and/or which (or any part of which) is capable of internally containing a fluid. Therefore there reader is to understand that any valve or adapter component is just as much a fluid conduit as, for example, a flexible or rigid hose or pipe. Indeed, the skilled reader will understand from the foregoing and the below that the invention is less concerned with the nature of the fluid conduits themselves and much more concerned with the nature of their connection, and with a means for repairing that connection when its sealing characteristics have degraded.

### Background to the Invention

Compression connections between fluid conduits are widespread, especially, and most pertinently as far as this application is concerned, in the domestic plumbing industry. That being said, it should be understood that the present invention is not exclusively concerned with the compression fittings and connectors commonly employed in this industry, and indeed may be applied to any compression connection being of the same or a similar type.

In general, a domestic plumbing compression connection is usually employed to connect a first fluid conduit, such as a flexible wire-braided hose or copper or other material pipe, to a second fluid conduit such as an isolation valve, simple tap or other fluid outlet, or a second hose or pipe. More recently, it has become standard plumbing practice to isolate fluid outlets such as taps, toilet cisterns, dishwashers, washing machines, boilers and the like from the mains supply pipes to which they must necessarily be connected, by means of an isolation valve. The provision of such isolation valves is useful from the point of view of both safety and convenience, because isolating such a fluid outlet from the supply main permits repair and/or replacement of said fluid outlet without first needing to close the primary mains stop tap to the entire premises in which said fluid outlet, and the fluid pipe network which serves, it are located.

Depending on the nature of the fluid conduits to be connected, standard compression fittings will generally take two different forms. A first form includes a compression olive or ring, being a ferrule of copper, brass or other metal or material being essentially annular in cross-section and having a cylindrical inner surface having a diameter marginally larger than the outer diameter of the first fluid conduit, being usually a rigid copper pipe and having a free end with which it is desired to make a sealed connection, a compression nut, and the compression fitting body itself. In order that the said pipe free end is sealingly secured within the compression fitting body, the compression nut is slid over the pipe free end, followed by the compression olive, and the pipe free end is then slid inside the compression fitting body, which is provided externally with threads corresponding to those of the compression nut. As the compression nut is brought into threading engagement with the compression fitting body and increasingly tightened, the olive is forcibly driven into the into the compression fitting body interior, and as a result the olive is radially plastically deformed such that the frictional engagement with the pipe it surrounds increases, and the pipe free end is thus also effectively dragged inside and sealed within the compression fitting body. Thus, the torque applied through the compression nut (usually by hand using a spanner or wrench) is mechanically advantageously converted to an axial force within the compression fitting which is sufficient to substantially uniformly radially compress the olive such that it eventually fits inside an interior bore of the compression fitting and thus provides the required fluid-tight seal with the pipe it surrounds. In order to ensure that the compression olive is somewhat self-locating inside the compression fitting as the compression nut is tightened, the exterior surfaces of the compression olive are usually chamfered at both ends so as to be reversible. Thus, inside the compression fitting, both the pipe and the initial leading edge of the olive may be capable of being received within the interior cylindrical bore of the compression fitting, but the remainder of the olive, being of a diameter marginally greater than said bore, cannot be so received without first being compressed.

A second form of compression fitting is commonly provided at the end of standard domestic plumbing flexible hoses, usually as a pre-attached, integral part thereof. Such flexible hoses usually comprise a rubber or flexible rubberised material interior tube which is commonly surrounded by a protective flexible wire braiding. At one free end of the hose, the cylindrical shank of a brass plug with a continuous hollow bore therethrough is inserted into the interior of the rubber tube so as to be sealingly clamped therein. To enhance the seal formed between the interior surface of the rubber tube and the cylindrical shank of the brass plug, said shank may be provided with a plurality of spaced apart ribs on its exterior surface. Towards the alternate end of said brass plug from said hollow shank, there is provided a retaining flange behind which is retained a compression nut which is thus secured to the said end of the flexible hose. In order to yet further increase the efficacy of the seal between the brass plug and the interior rubber tube, an aluminium or steel ferrule is also provided behind the compression nut, said ferrule having an end flange disposed behind the compression nut such that the ferrule is retained between the free end of the hose and said compression nut, and an annular body portion which extends rearwardly from the flange covering an end region of the braided hose. The annular body portion of the steel ferrule is radially compressively deformed against the hose such that said ferrule effectively clamps a portion thereof immediately behind its free end in permanent fashion. This clamping action of the compressively deformed ferrule not only increases the seal between the cylindrical shank of the plug and the rubber hose in which it has been inserted, but also effectively secures the connection between the plug and the rubber hose such that the plug cannot escape or be released from the tube without extreme force.

In order that a compression fitting of this type can provide a sealing connection with another fluid conduit with which it is to be connected by means of the compression nut, the free radial surface of the retaining flange, being that surface on the opposite side of the flange to its retaining surface, is provided with a flexible annular washer or gasket commonly of rubber or other rubberised and/or sealing material. The rubber washer substantially completely covers said surface and is retained in place over said surface by means of an annular neck provided around the bore opening on said free surface of said retaining flange. Ideally, the height of the annular neck approximates to that of the thickness of the washer which has an internal opening diameter slightly less than the external diameter of said annular neck such that there is some slight frictional engagement between respective surfaces of neck and washer. The washer is essential as far as providing a fluid-tight seal is concerned, because it is against the free surface of the washer that an annular surface of the threaded part of the second fluid conduit bites as the compression nut of the flexible hose is screwed and tightened onto said threaded part.

Importantly, at least in the context of the present invention, the abovedescribed forms of compression fitting both have fundamental weaknesses, at least as far as providing reliable fluid-tight sealing connections is concerned.

In the former case, the seal is provided only as a result of the plastic deformation of the metal olive inside the compression fitting against the pipe, and there is no other component or material within the compression fitting which is capable of providing a required seal, should the sealing interface between olive and pipe fail. In the latter case, the fluid tight seal which is created inside the compression fitting is entirely dependent on the extent to which the compression nut is tightened around the threaded part of the second fluid conduit because this tightening action progressively and increasingly axially displaces the annular end surface of the second fluid conduit (in most cases, an isolation valve, tap or other machined or otherwise formed metal component) against the washer so as to create the seal. Therefore, the formation of a fluid-tight seal within the compression fitting is entirely dependent on precisely tightening the compression nut to a predetermined degree - if the compression nut is under-tightened, the seal will be ineffective and fluid leakage will occur, and conversely over-tightening the compression nut will result in damage to the sealing washer because the annular end surface is driven into the washer with such force that it cuts or shreds the washer internally of the compression fitting, thus again rendering the seal ineffective. Furthermore, where existing compression fittings are already exhibiting minor leaks, for example if drops of fluid periodically appear on the exterior surfaces of the said fitting, the natural tendency, at least for inexperienced tradespeople, is to further tighten the compression nut in an effort to stem the leak. Such action of course inevitably only worsens the leak, because further tightening the compression nut only results in yet further damage to the washer inside the compression fitting.

Persons skilled in the art are well aware of these problems. In most cases, the only reliable solution is to replace the entire hose on which the compression assembly (i.e. compression nut, washer, brass plug and ferrule) is provided because it is exceedingly difficult to successfully extract the damaged washer from inside the compression nut, especially if it has substantially disintegrated. Other proposed solutions include the use of sealing tapes, such as polytetrafluoroethylene (PTFE) tape, which, after disassembly of the compression fitting, can be wrapped around the threaded part of the second fluid conduit before reconnecting the compression nut therewith and tightening.

However, despite the inherent sealing and fluid repelling qualities of PTFE, the interaction of the threads of the compression nut with those of the second fluid conduit tends to disrupt the tape to such an extent that it does not create an effective seal, or it creates a seal which will only be temporarily effective. In short, where compression fittings of the second type are failing to any extent, then complete replacement, at least of the flexible hose, currently appears to be the only reliable solution.

Even despite the mass-production and widespread use of such flexible hoses, they are still relatively expensive, and therefore it is an object of the present invention to provide a reliable cost-effective means for completely repairing leaking compression fittings which
- Is simple and quick to fit,
- does not require the services of experienced tradespeople to install,
- provides a far superior seal to that of the conventional washers or olives currently commonly employed within compression fittings, and one which only improves as the compression nut is tightened, and
- do not or cannot fail as a result of conventional manual, hand-and-wrench applied tightening of the compression nut, or possess at least some significant inherent resistance to such a failure mode.

In terms of other prior art, US2529534, US5192095 and DE2623157 all disclose adapter-type inserts for compression fittings.

### Summary of the Invention

According to the present invention there is provided an insert for a compression fitting as prescribed in claim 1 hereof.

Preferably, the contact surfaces of the first and second fluid conduits or their respective compression inducing parts is inclined relative to the longitudinal axes of the bores defined within and through said first and second conduits.

Preferably, the angles of inclination of the contact surfaces of the first and second conduits or their respective compression-inducing parts, and the seating surfaces of the insert are one of: the same, different. In the latter case, depending on particular embodiments, it may be preferable that the angle of inclination of the contact surfaces is greater than that of the angle of inclination of the seating surfaces, and in other embodiments the converse may be preferable.

In a most preferred embodiment, the insert is provided with one or more neck portions extending substantially longitudinally axially of the insert and on one or both sides of the insert flange, said neck having interior dimensions and cross-sectional shape approximating to that of the aperture through the insert and thus at least partially defining said aperture, and exterior dimensions being less than those of the flange to which said neck portion is attached or with which it is integrally formed. Most preferably the cross-sectional shape of the neck portion is complementary with that of one of the first and second fluid conduits, and the dimensions thereof are marginally less than those of the either or both of the first and second fluid conduits such that the neck portion can easily, quickly and simply be received within said fluid conduit. In this manner, not only can an effective seal be realised between a seating surface of the insert and a contact surface of a respective one of the first and second conduit, but the provision of a neck portion of such dimensions and shape allows for the insert to be quickly, simply and easily properly located and at least loosely retained within said conduit prior to any connection of the alternate conduit and the subsequent tightening of the compression fitting around the insert.

Most preferably, the insert is provided with only a single neck portion extending axially longitudinally away from the flange on one side thereof.

Preferably, said first seating surface is created as a chamfer of one of the interior edges of the flange of the insert which defines one end of the opening of the aperture through the insert, and a second seating surface being provided on the alternate side of the flange from the first seating surface. Preferably, the second seating surface is provided as part of said flange in that said flange includes a frustum-like or frusto-conical portion having inclined sides which form the second seating surface or surfaces of said insert.

Most preferably the overall cross-sectional shape of the insert, the first and second conduits and their respective compression-inducing parts is circular. In this particularly preferred embodiment, the insert is essentially most preferably annular.

In a most preferred embodiment, the material from which the insert is formed is one which conforms to the conventional Poisson effect for engineering, plastics and rubber materials, that is to say the material must be non-auxetic.

A most preferable choice for insert material is PTFE, although a variety of engineering plastics, polymers, and synthetic and natural resilient materials may also be used. However, it is most preferable that the material be one or more of: liquid repelling, chemically inert or largely unreactive, elastically resilient and capable of deformation (most preferred materials are linearly elastic), isotropic, orthotropic, transversely isotropic, and (most importantly) capable of forming a robust fluid-impregnable seal against a significantly more resilient or comparatively incompressible or much less compressible material, such as steel, aluminium, brass, copper in which domestic plumbing pipes, fixtures and fittings are commonly manufactured.

Preferably, the compression fitting is one of axial and radial in operation, with the direction of action thereof also being accordingly axial or radial. Most preferably, the compression fitting is axial in operation in that its operative action is to connect and compress the first and second fluid conduits together in a direction parallel to the longitudinal axes of the openings of the bores through them.

Most preferably, the compression-inducing part of the fitting first fluid conduit is a compression nut, and preferably the first fluid conduit is a flexible hose, which is further preferably braided. Most preferably, the compression nut is secured at one end of the hose by means of a retaining plug inserted within the hose and behind which said compression nut can freely rotate. In this particular arrangement or embodiment, preferably the first contact surface of the first fluid conduit is the uppermost edge of a raised neck which stands proud of a first radial surface of a retaining flange of the retaining plug, said compression nut being retained on and secured to one end of the hose behind an opposite surface of said retaining flange. Preferably, this first contact surface is brought to bear against the first seating surface of the insert.

Most preferably, the second fluid conduit is one of: a tap, an isolation valve, a flexible hose which may further preferably be covered with a wire braid, a rigid pipe. Preferably, the compression-inducing part of the second conduit is an exterior thread provided on or integrally formed as part of the second fluid conduit, said thread corresponding to an interior thread provided on an interior surface of the compression nut, and the second contact surface being one of: the endmost free edge of the second conduit, an internal chamfer provided around said endmost free edge, and an external chamfer provided around said endmost free edge. In use, most preferably, the flange of the insert is clamped between the endmost free edge of the second conduit and the raised neck provided on the retaining flange of the retaining plug. Ideally and most preferably, the external radial or diametral dimension of the flange of the insert is of the order of 1mm or less smaller than the internal corresponding radial or diametral dimension of the compression nut such that the insert flange can be completely received within said compression nut with 1mm or less clearance.

Preferably, one of the fluid conduits or its respective compression inducing part defines an opening leading to a cavity in which the insert, and in particular the flange thereof, may be received with a small clearance, said clearance being less than the maximum transverse expansion said flange is likely to undergo when compressed within the compression fitting such that after some predetermined degree of tightening, one of an exterior edge or surface of said flange comes into contact with, and is effectively sealed against, an interior surface or edge of said cavity.

Although the foregoing statements of invention, and indeed the following specific description, have been couched in terms of an insert being of generally unitary construction, it is to be understood that although such a unitary insert is the most preferred configuration, it may be possible for the insert to be comprised of two or more complementary parts, for example of semi-circular or other suitable cross-sectional shape which, when disposed adjacent one another within the compression fitting and clamping compressed together therein form a complete insert component which provides the requisite fluid sealing characteristics within the compression fitting. Alternatively, the insert may be of unitary construction but may comprised two or more splayed-apart limbs which may be brought together as the insert is inserted in one or other of the fluid conduits. The present invention should thus be considered as encompassing such variations.

According to a further aspect of the invention there is provided a compression fitting as previously described in which an insert according to the first aspect of the invention is provided. In another aspect of the invention, there is provided an assembly comprising a first fluid conduit and a second fluid, a compression fitting, and an insert compressively clamped therewithin, the compressive force being exerted on said insert within said compression fitting being sufficient to cause expansive deformation thereof into sealing engagement with a substantially continuous interior surface of said compression fitting so as to provide an effective fluid seal between said first fluid conduit and said second fluid conduit.

A specific embodiment of the invention is now described by way of example and with reference to the accompanying drawings wherein.

### Brief Description of the Drawings

Figure 1 shows a perspective view of conventional (prior art) compression fittings of a first type used for connecting together the free ends of first and second fluid conduits,
Figure 2 shows a perspective view of a conventional (prior art) compression fitting of a second type wherein a conventional braided hose is connected to a conventional isolation valve,
Figure 3 shows a sectional view of the various components of the compression fitting of Figure 2, in particular the first and second fluid conduits and their respective compression-inducing and sealing parts by means of which the conduits are sealingly connected together,
Figures 4A, 4B, 4C show perspective views from either end of an insert according to the present invention, and a sectional view of said insert respectively,
Figure 5 shows a sectional view of the compression fitting of Figure 3 in which an insert according to the present invention has been provided prior to the connecting together of the fluid conduits,
Figure 6 shows a sectional view of the adapted compression fitting of Figure 5 after the respective fluid conduits have been connected together, the insert being thus compressively clamped within the compression fitting to provide an effective seal therefor, and
Figure 7 shows a much enlarged schematic sectional view of selected components of the compression fitting of Figure 6 to illustrate the manner in which the insert may be deformed within said compression fitting and how it may provide an effective fluid-tight seal therein.

### Detailed Description

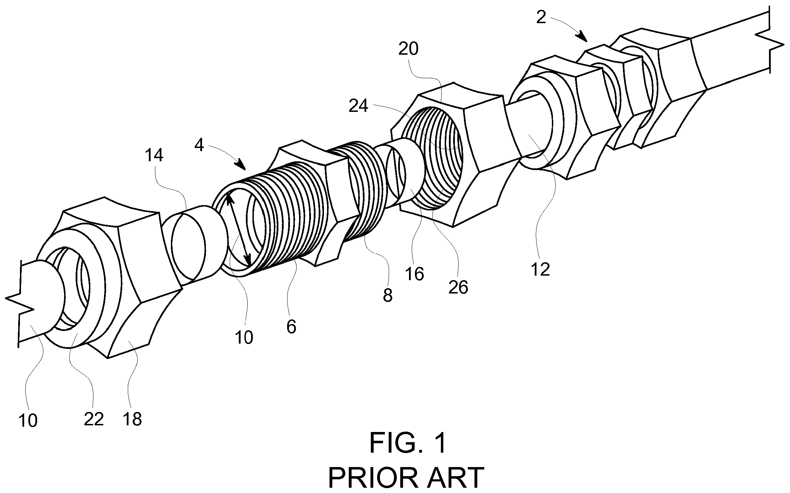

Referring firstly to Figure 1, as previously described in the introduction hereof, a conventional compression fitting indicated generally at 2 comprises an essentially completely and continuouisly hollow compression fitting body 4 at either end of which is provided an exteriorly threaded hollow shank 6, 8 into which the free ends of first and second fluid conduits 10, 12 respectively can be slid before abutting an interior shoulder (not shown) within the interior of the fitting. The dimensions are both generally standardised (e.g. a "British Standard Pipe" or BSP size), and important because the clearance between the exterior diameter of the conduits 10, 12 and the interior diameters of the hollow shanks 6, 8 must be less than the thickness of essentially annular olives 14, 16 which have interior diameters which are marginally larger than the conduit diameters, and exterior diameters which are marginally larger than the interior diameters of the hollow shanks. Thus the olives can easily slide over the conduits, but a conduit with and olive in place over its free end cannot, at least initially, be received within hollow shank of the compression fitting body. In order that this latter configuration can be achieved, and in sealing manner, compression nuts 18, 20 with annular end flanges 22, 24 (seen inside nut 20) are first slid over the conduits, and it is said compression nuts which not only provide the means for connecting the conduits to the compression fitting body and thus together, but also provide the means for exerting significant axial compression against the olive within the nut as its interior threads 26 (for nut 20) are brought into engagement with the corresponding threads of a respective hollow shank 8 and tightened thereon. The reason that compressive force on the olive, and thus in turn the conduit around which the olive is disposed is that the annular end flanges have an internal diameter which, although of course necessarily being greater than the conduit external diameter, is less than at least the diameter of the most exterior surface of the olive. Thus, as the nut is tighten, the olive is swaged into and force within the hollow shank, and is it is so swaged, it creates a seal within the outer surface of the conduit it surrounds, as is known in the art.

The primary disadvantage of compression fittings of this type is that when the seal between the swaged olive and the conduit exterior surface fails, the only method of repairing the compression fitting is generally to remove and replace the entire compression fitting. Often this entails cutting the conduits, particular if the olives have become swaged around their free ends, and this in turn can result in requiring an insert and yet another compression fitting if the conduits are fixed in place.

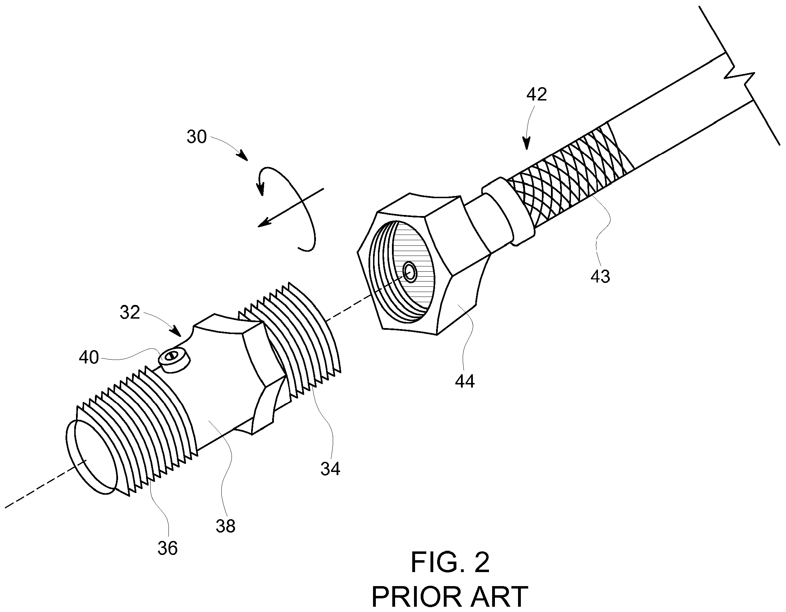

Referring now to Figure 2, there is a compression fitting of a second type, and one which is particularly relevant to the present invention. In this Figure, the compression fitting 30 consists on the one hand of a fluid conduit 32 in the form of a well-known isolation valve, either end of which is provided with hollow exteriorly threaded shanks 34, 36 which extend axially away from a central body portion 38 in which a simple internal rotary valve (not shown) is provided. The valve is actuated by means of a simple screwdriver, the functional end of which is inserted into a screw 40 and rotated to cause rotation of the internal valve between open and closed positions. On the other hand, the compression fitting comprises a fluid conduit 42 having a hose portion 43 which is commonly protected with a wire braid and terminated at a free end with a compression nut 44 in a manner which allows free rotation thereof while nevertheless being connected securely to the hose free end. As is well known, the connection of one fluid conduit to the other is achieved by threading the compression nut onto one of the hollow threaded shanks 34 of the isolation valve.

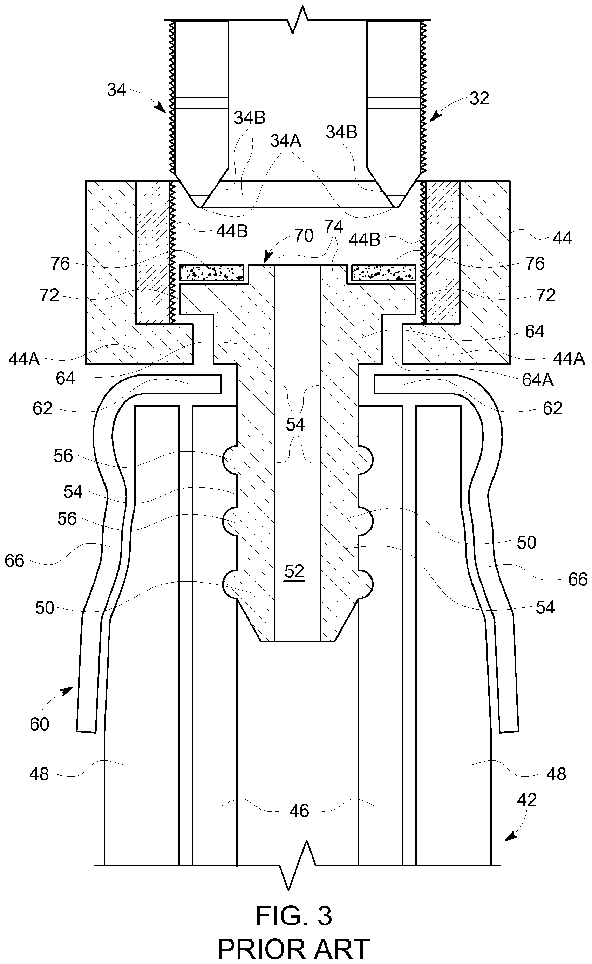

For a specific and more detailed explanation of how compression fittings of this particular type achieve a fluidly sealed connection between the conduits, reference is now had to Figure 3, in which it can be seen that hose 42 consists of a hollow internal tube 46, usually of rubber, rubberised material, or other suitable fluid-carrying material which covered with a protective sheath 48, usually a wire braid. In the free end of the rubber tube 46 is inserted a brass plug 50 through which a continuous bore 52 passes and which has a shank portion 54 having a plurality of spaced apart 56 ribs on its exterior surface, the shank and the ribs being dimensioned such that the tube 46 is required to be elastically deformed slightly around and over the ribs during insertion of the shank 54 therein, the hoop stress within the elastically deformed tube thus providing a good fluid seal. In order that this fluid seal between tube and brass plug shank is further improved, a ferrule 60 having an end flange 62 in which is provided an aperture of diameter greater than the exterior diameter of shank 54 but less than the exterior diameter of the tube 46 is interposed between a wider body portion 64 of the plug 50 and the free open end of the hose 42 in which it has been inserted. The ferrule is peripherally compressed and thus deformed so as to provide a cylindrical constriction 66 such that the ferrule is not only frictionally secured to the wire braid underneath, but also exerts a somewhat permanent radial compression on the rubber tube 46 thus improving the seal between it and the shank 54 of the plug 50. Additionally, the said cylindrical constriction effectively ensures a robust connection between hose and plug that the latter cannot escape from the former unless a destructively excessive axial force is applied or the connection betwixt the plug and hose is otherwise destroyed.

Towards the uppermost free end 70 of the plug 50, there is provided a retaining flange 72 behind which the compression nut 44 is retained and thus secured to the hose 42, said compression nut having an end flange 44A within which is provided a circular aperture having a diameter greater than that of the wider body portion 64 of the plug so that there exists a clearance 64A sufficient to permit the compression nut to freely rotate around said wider body portion while nevertheless remaining essentially axially loosely fixed in place between the plug and the hose. The compression nut is machined or otherwise tapped internally with threads 44B which correspond to the exterior threads of the hollow shanks 34, 36 of the first fluid conduit 32 such that the compression nut can be connected therewith in conventional fashion. In order that a sealed connection may be achieved between the annular free end surface 34A of the first fluid conduit 32 and the plug 50, said plug is provided with an annular neck 74 around the bore 52 opening, said annular neck standing proud above the uppermost surface of retaining flange 72, and an annular washer or gasket 76 of rubber or other resilient elastically deformable sealing material similar in thickness to the height of the annular neck 74, is disposed around said annular neck and frictionally retained in place by virtue of a slight interference fit therewith. As the threads 44B of the compression nut engage with and are rotated around the corresponding threads 34 of the first fluid conduit, the annular end surface 34A is drawn axially downwardly inside the compression nut until said surface 34A comes into contact with the uppermost exposed surface of the gasket 76. After the initial contact between surface 34A and the gasket 76, the compression nut may be further tightened, the result of which is that the gasket is compressed by said annular surface inside the compression fitting, and a fluid tight seal is duly formed therebetween.

As is well known by those skilled in the art, it is entirely possible, and indeed quite common, for the compression nut 44 to be over-tightened, which results in the annular surface 34A biting, tearing, cutting or otherwise destructively impairing the gasket 76 internally of the compression fitting, and thus the seal between them. Furthermore, when a compression fitting of the type being described leak is discovered to be leaking fluid, for example when the exterior surfaces of the compression fitting are wet or dripping, or where a pressurised gaseous fluid is flowing through the compression fitting escapes therefrom in hissing fashion, the natural instinct of unskilled persons is to yet further tighten the compression nut which of course only further exacerbates the problem, often to the point of the gasket completely disintegrating within the fitting and thus failing to provide any seal whatsoever.

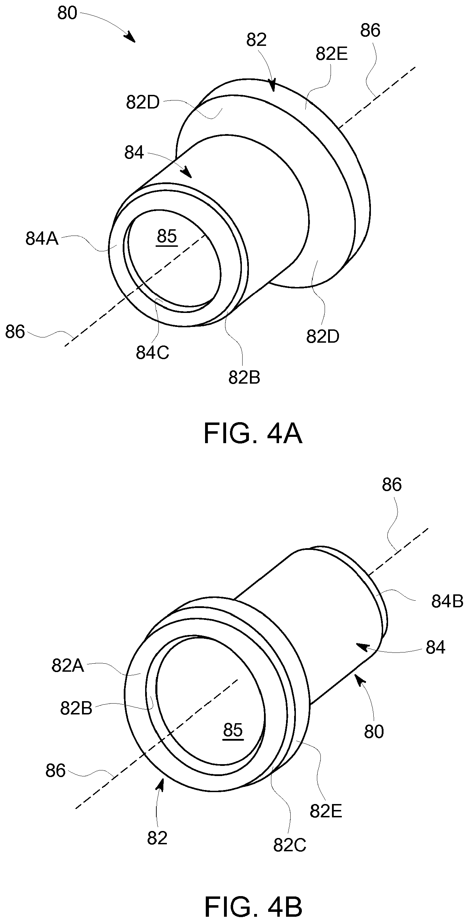

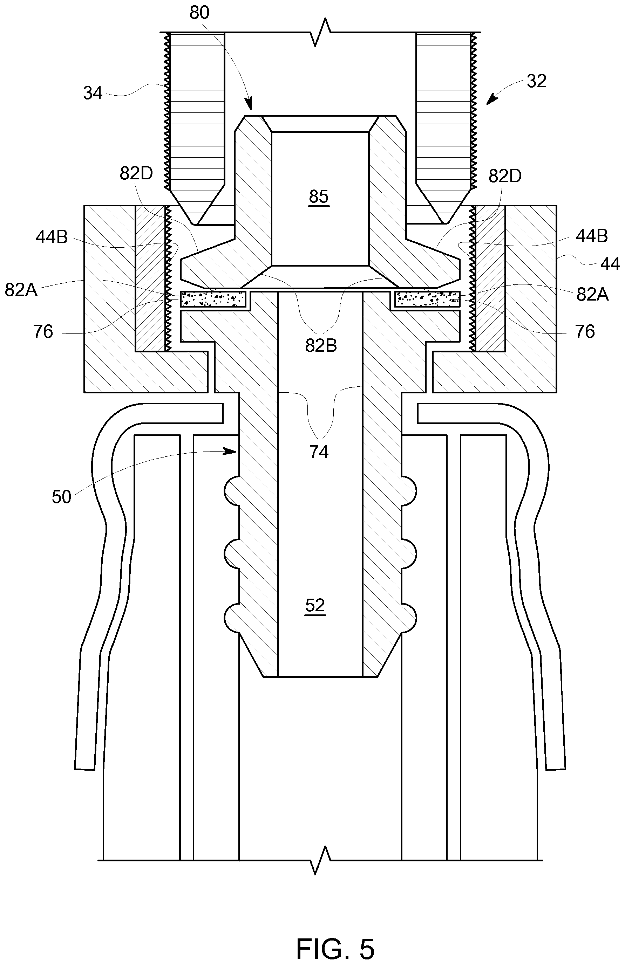

Referring now to Figures 4A, 4B 4C, the present invention provides an insert 80 similar in appearance to that of a common top hat in that it is essentially hollow and consists primarily of an annular end flange 82 from one side of which extends axially a hollow cylindrical neck 84 which together surround a generally cylindrical hollow inner bore 85. Each of the flange 82 and neck 84 possess essentially annular planar end surfaces 82A, 84A, the planes of which are perpendicular to the longitudinal axis of the insert indicated generally at 86. Importantly, at least for a most preferred embodiment where the insert is to be used to repair a leaking compression fitting of the type described with reference to Figure 3, the external diameters of the flange 82 and the neck 84 are precisely dimensioned such that on one hand the neck portion can slide inside the open end of one of the exteriorly threaded hollow shanks of the first fluid conduit with a peripheral clearance of, e.g. <=1mm, preferably <=0.5mm, further preferably <=0.1mm, and on the other hand the flange 82 can slide into and downwardly within an interior cavity of the compression nut 44 with a similar peripheral clearance relative to the proud-standing edges of the nut threads 44B, ultimately coming to rest on, and being supported by either or both of the gasket 76 and the neck 74 of the plug (see Figure 5).

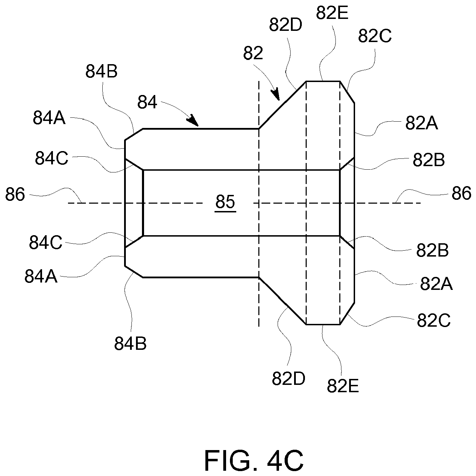

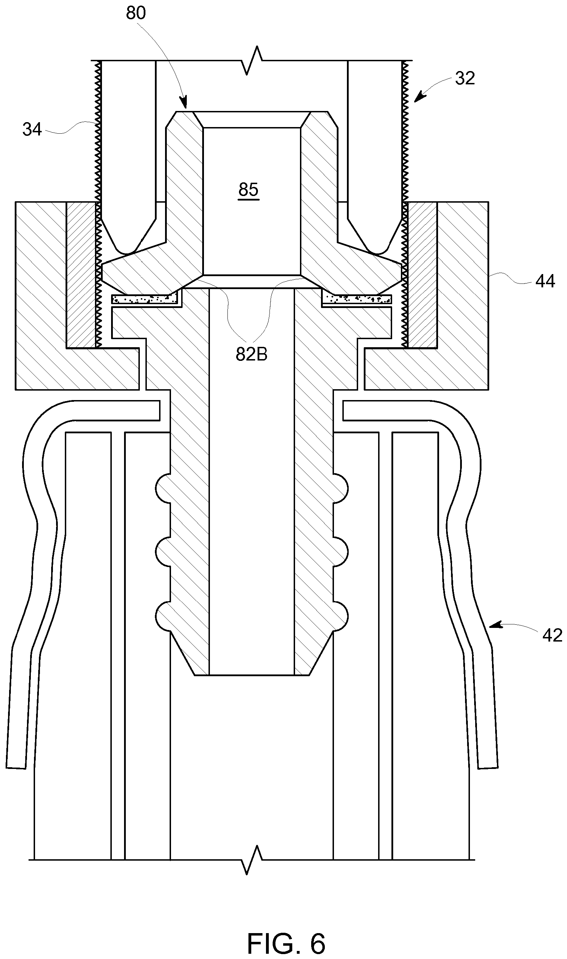

The insert 80 is further provided with a number of different chamfered or otherwise created surfaces 82B, 82C, 82D, 84B, 84C which are inclined relative to the axis 86, one or more of said surfaces being adapted to function as seating surfaces against which certain other component parts of the compression fitting of Figure 3 may, in use, be brought to bear. Specifically, the flange 82 is provided with a first inclined seating surface 82B disposed between the end of cylindrical inner bore 85 terminating within said flange 82, at the planar end surface thereof 82A. As can be seen clearly in Figure 4C, said inclined seating surface 82B defines an essentially frusto-conical space to its interior, with the smaller diametral dimension thereof being identical to the diameter of the cylindrical interior bore 85. The other larger diametral dimension of said frusto-conical space is carefully selected such that it is greater than the exterior diameter of the proud-standing neck 74 of the plug of the second fluid conduit described above. The reasons for such precise dimensioning will be more clearly and immediately understood from the specific description provided with reference to Figures 5 & 6 provided below, but in general seating surface 82B is inclined in the manner described to allow for manufacturing variations in the proud-standing neck 74 of plug 50, and in particular variations in the exterior diameter thereof. Specifically, provided that said neck exterior diameter is within the range defined by the smaller and larger diametral dimensions of the seating surface 82B, the outermost edge of said neck will come into contact with the seating surface, and, most preferably, a seal may be formed between them when the insert is compressed to a sufficient extent.

Although inclined surfaces 84B, 84C are not intended to function as seating surfaces in this particular embodiment, it is nevertheless preferred that they be provided if for no other reason than to rid the insert of sharp edges or corners which would otherwise exist at the intersections between the annular planar end surface 84A, the interior cylindrical bore 85, and the exterior cylindrical surface of the neck 84. Also, the provision of a chamfered inclined surface 84B can be useful to mechanically assist the location of the neck within the hollow exteriorly threaded shank of the first fluid conduit, which is commonly provided with a similarly chamfered inclined surface between the annular end surface 34A and the interior hollow bore of said shank, as is depicted in Figure 3, although not specifically referenced or described.

As can be seen in Figures 4A & 4C, the flange 82 is also provided with an exterior inclined seating surface 82D, said surface meeting and extending in diminishing fashion away from the exterior axially aligned (i.e. not inclined) cylindrical surface 82E of the flange 82, being the maximum diameter of the insert, said surface terminating where it meets the smaller diameter exterior cylindrical surface of the neck referenced more generally at 84. It should also be noted that the inclined seating surface 82D also partly defines an axial portion of the insert which is of generally frusto-conical shape.

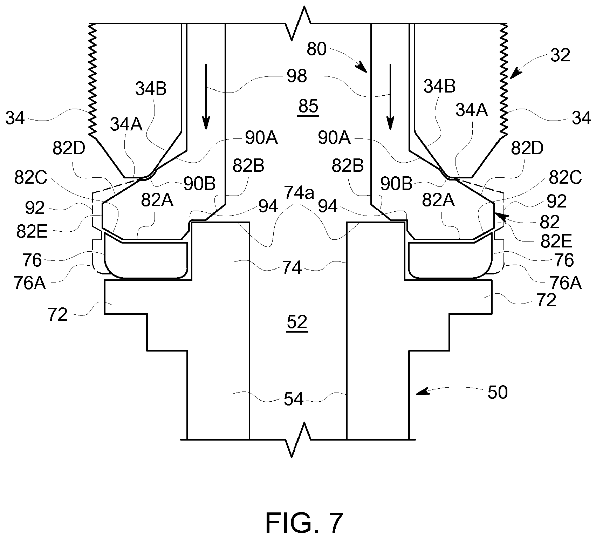

Referring now to Figures 5, 6 and 7 (in which relevant reference numerals used in Figure 3 are repeated where appropriate), the insert of Figure 4 is shown in place within the compression nut 44, prior to connection with the shank 34 of the first fluid conduit 32, with its interior cylindrical bore 85 substantially aligned with the bore 52 of the plug 50, and with its larger annular end surface 82A in contact with, resting on and being supported by the gasket 76. It is important to note from the Figure that the innermost (smaller) and outermost (larger) diameters of inclined seating surface 82B are less than and greater than the largest diametral dimension of the neck 74 of the plug 50. Thus careful and precise dimensioning of the insert, and in particular the innermost and outermost diameters of the inclined seating surface 82B, automatically ensures not only that the uppermost exterior (larger diameter) edge of the neck 74 will always come into contact with said seating surface, even allowing for manufacturing variations in the said larger diameter, but also that a component of any reaction force between said seating surface and plug neck exterior edge will be directed laterally (or radially) of the insert into the flange, thus tending to give rise to a correspondingly lateral or radial elastic or plastic deformation of the flange in that direction, as will be seen and described with particular reference to Figures 6 and 7.

It must also be noted in Figure 5 that not only is the neck of the insert 80 received within the interior of the hollow shank 34 of the first fluid conduit 32 with a small clearance, a similarly small clearance exists between the edges of the threads 44B on the interior of the compression nut and the exterior cylindrical surface 82E of the insert. In particular, in certain embodiments, it is desirable that the latter of these clearances is less than the radial extension that the flange of the insert is likely to undergo under compression, because in this case, it is possible, and indeed in certain embodiments, desired, that radial/lateral deformation of the flange outwardly causes the exterior cylindrical surface 82E thereof to come into contact with the proud-standing edge of the interior threads of the compression nut, most preferably in sealing fashion.

In Figure 5 (and more clearly seen in Figures 6 and 7), it should further be noted that, the annular end surface 34A of the hollow shank 34 of the first fluid conduit is caused to travel axially downwardly within the compression nut as it is screwed onto and around the exterior threads of said hollow shank, such axial travel ultimately being arrested when said surface 34A, or an edge of it, or (in some embodiments) the inner inclined surface 34B (see Figure 3), comes into contact with said inclined seating surface 82D of the insert 80. At this point, any further tightening of the compression nut 44 causes an increase in the axial compressive force applied to the respective inclined seating surfaces 82B, 82D and thus to the flange 82 in general, and this in turn causes at least some radial/lateral deformation of the flange, at least one of:
- locally in the region of the contact areas between respective parts of the first and second fluid conduits and the insert contact surfaces, and, more generally,
- in terms of an enlargement of the maximum exterior diametral dimension of said flange.

Most importantly, as far as the present invention is concerned, it is the local deformation of the flange in the region of contact between the annular end surface 34A of the first fluid conduit and the inclined seating surface 82D of the insert which gives rise to a robust fluid seal therebetween, though of course a similarly robust fluid seal may also be formed in the region of contact between the outermost edge of neck 74 and the inclined seating surface 82B. The latter of these seals may arise either before or after the seal is created between annular end surface 34A of the first fluid conduit and the inclined seating surface 82D, or simultaneously. In addition to the inclined seating surfaces of the insert, the nature of the material from which the insert is made (most preferably PTFE) is also important, as are its dimensions, as will be further understood from the below.

Referring specifically to Figures 6 and 7, it can be seen that first 32 and second 42 fluid conduits are now connected together with the insert 80 inside the completed compression fitting. In Figure 6, the interior threads of compression nut 44 (omitted in Figure 7 for clarity) are fully engaged with the corresponding threads 34 on the exterior of the hollow shank of the first fluid conduit 32, which has thus been drawn within and inside the compression nut 44 to such an extent that the annular end surface 34A has not only made contact with the inclined seating surface 82D of the insert but caused, in this embodiment, both localised deformation 90A, 90B (see Figure 7) of the flange 82 in the region of said contact, and a more general radial/lateral deformation (shown by the dotted line 92 in Figure 7) such that the exterior cylindrical surface 82E has come into contact with the interior threads of said compression nut, eliminating the previously existing clearance between these two components prior to the lateral/radial deformation 92 of the insert flange. The inclination of surface 82D ensures a differential deformation of the material of the insert on either side of the region thereon with which the annular end surface 34A (or an edge thereof) makes contact, and such differential deformation contributes to the efficacy of the fluid seal formed therebetween, and also possibly to one, other or both sides of said contact region. Thus deformation 90A will be slightly different from deformation 90B.

Additionally, it is advantageous that a more general lateral/radial deformation 92 of the flange occurs to the extent described and illustrated in Figures 6 and 7 as the creation of a further fluid seal between exterior cylindrical surface 82E and the interior threads or thread edges of the compression nut further increases the overall efficacy of the fluid seal provided by the insert within the compression fitting. Even if the more general radial/lateral deformation 92 does not occur to the extent described or even at all, and no seal is created between exterior cylindrical surface 82E and the interior threads or thread edges of the compression nut, it is still nevertheless important to note that the insert of the present invention effectively at least doubles the number of fluid seals created within the compression fitting, because at the very least, the metal edges or surfaces of both the first and second fluid conduits (or relevant component parts thereof) both come into contact with the respective/corresponding seating surfaces 82B, 82D of the insert, and the nature of such interactions is such that continuous and thus complete fluid seals are effectively created on each of those said seating surfaces. Specifically, it can be seen in Figure 7 that the inner seating surface 82B of the insert 80 is deformed at 94 as a result of the contact with and inward compression exerted by the continuous circular edge 74A of the neck 74 as the compression fitting is tightened and the insert is, as result, forced axially downwardly as indicated by arrows 98.

By contrast, a standard prior art compression fitting (when functioning correctly) only effectively includes one sealing region created as a result of the contact between the annular end surface 34A of the first fluid conduit and the uppermost free/exposed annular surface of the gasket 76. In a preferred embodiment of the invention, when the insert flange deforms generally radially laterally (as indicated at 92 in Figure 7) under axial compressive force to such a degree that the exterior cylindrical surface 82E of the flange comes into contact with the interior threads of the compression nut in sealing fashion, then such a compression fitting would effectively possess three seals in total, thus tripling the effectiveness of the seal as compared to standard compression fittings.

It is also to be noted from Figures 6 and 7 that the original gasket 76 is compressed between the annular end surface 82A of the insert and the uppermost surface of the retaining flange 72 of the plug 50 which forms a seat for the gasket. As the gasket itself is formed of a rubber or rubberised or other usually non-auxetic material, such compression can also cause the exterior cylindrical surface of the gasket to be deformed radially laterally as indicated by dotted line 76A and thus also come into contact with the interior edge surfaces of the threads of the compression nut, even further enhancing the efficacy of the fluid seal provided by the remediated compression fitting.

The following paragraph provides an abstract-like summary of the invention which is defined in the appended claims:
An remedial insert for an otherwise leaky or defective compression fitting, typically a conventional domestic or commercial plumbing-type compression fitting, is herein disclosed. Such compression fittings are adapted for connecting a first fluid conduit with a second fluid conduit and will generally include at least first and second compression-inducing parts respectively cooperating with or being provided as part of said first and second fluid conduits and adapted for both connecting said conduits together and inducing a compression between them. Within the first and second fluid conduits or their respective compression-inducing parts, are provided first and second contact surfaces respectively which are disposed to the interior of the compression fitting when the conduits are connected together and which define openings of the fluid carrying bores of first and second fluid conduits respectively. The insert is sized and shaped so as to be capable of being received entirely within the compression fitting so that the contact surfaces of said fluid conduits come into contact and engage with respective surfaces of the insert, which is thus compressed between said contact surfaces as the compression fitting is tightened. In general, said insert comprises a body which surrounds and defines a bore through the insert which, in use, is substantially aligned with the bores of the conduits, said body being provided with or consisting essentially of a flange of material adapted to be clamped within the compression fitting between said first and second contact surfaces. The invention is characterised in that said insert is formed of a plastics, PTFE, or other non-auxetic material which tends to expand under a compressive load in a transverse direction to that in which the load is applied. The invention is further characterised in that the insert is provided with at least a first seating surface on one side of the flange, said seating surface being inclined relative to a longitudinal axis of the insert and against which one of the first and second contact surfaces is brought to bear as the compression fitting is tightened and said insert is thus compressed such that on one side of a contact region whereat the said one contact surface and the said inclined seating surface come into contact, the extent to which the insert deforms as a result of the compression applied thereto is different to the deformation which occurs on the other side of said contact region.

## Claims

1. An insert (80) for a compression fitting (2, 30) between a first fluid conduit (10, 32) and a second fluid conduit (12, 42), said compression fitting comprising at least first and second compression-inducing parts (18, 6 and 8, 20, or 34, 44) respectively cooperating with or being provided as part of said first and second fluid conduits and both connecting said conduits together and inducing a compression between them, wherein said first and second fluid conduits or their respective compression-inducing parts are provided with first (34A, 34B) and second (74, 74A) contact surfaces respectively which are disposed to the interior of the compression fitting when the conduits are connected together and which define openings of the fluid carrying bores of first and second fluid conduits respectively, said insert being sized so as to be capable of being received entirely within the compression fitting and being of generally complementary cross-sectional shape to that of said fluid conduit contact surfaces, said insert having a body which surrounds and defines a bore (85) through the insert which, in use, is substantially aligned with the bores of the conduits, said body being provided with or consisting essentially of a flange (82) of material adapted to be clamped within the compression fitting between said first and second contact surfaces,
**Characterised in that**
Said insert is formed from a non-auxetic material and is provided with at least first (82B) and second (82D) seating surfaces, said first seating surface being provided on one, inner side of said flange and said second seating surface being provided on an alternate, outer side thereof, each of said seating surfaces being inclined relative to a longitudinal axis of the insert, and arranged such that the first and second contact surfaces come into contact with a respective one of the first and second seating surfaces at first and second contact regions as the compression fitting is tightened, said insert thus being compressed therein to the extent that, on one side of at least one contact region, the extent to which the insert deforms (90A) as a result of the compression applied thereto is different to the deformation (90B) which occurs on the other side of said contact region, each of said contact regions being continuous so as to create complete fluid seals on each of the said seating surfaces.

2. An insert (80) according to claim 1 claim **characterised in that** the insert is provided with at least one neck portion (84) extending substantially longitudinally axially of the insert and on one or both sides of the insert flange (82), said neck portion at least partially defining said bore (85) within through its interior, and the exterior dimensions of said neck portion being less than those of the flange to which said neck portion is attached or with which it is integrally formed.

3. An insert (80) according to claim 2 **characterised in that** the cross-sectional shape of the neck portion (84) is complementary with that of one of the first (10, 32) and second (12, 42) fluid conduits and the dimensions thereof are marginally less than that fluid conduit such that the neck portion is capable of being received within a respective one of said fluid conduits.

4. An insert (80) according to any preceding claim **characterised in that** the second seating surface (82D) is provided as part of said flange (82) **in that** said flange includes one of a frustum-like, or frusto-conical, portion having inclined sides which form the second seating surface of said insert.

5. An insert (80) according to any preceding claim **characterised in that** the overall cross-sectional shape of the insert is essentially annular.

6. An insert (80) according to any preceding claim **characterised in that** the material of which the insert is formed is PTFE.

7. An insert (80) according to any preceding claim **characterised in that** the external radial or diametral dimension of the flange (82) of the insert is of the order of 1mm less than the internal corresponding radial or diametral dimension of that respective compression-inducing part (44, 44B) of said compression fitting within which said insert is adapted to be received and disposed such that the flange of said insert is received within said compression-inducing part with a clearance being of the order of 1mm.

8. An insert (80) according to any preceding claim **characterised in that** one of the fluid conduits (10, 32 or 12, 42) or its respective compression inducing part (18, 6 and 8, 20, or 34, 44) defines an opening leading to a cavity in which the insert, and in particular the flange (82) thereof, may be received with a small clearance, said clearance being less than the maximum transverse expansion said flange undergoes when compressed within the compression fitting after some predetermined degree of tightening such that one of an exterior edge or surface of said flange comes into contact with, and is effectively sealed against, an interior surface or edge of said cavity.

9. An insert (80) according to any preceding claim which is one more of:
- of unitary construction, optionally comprising splayed-apart limbs,
- comprised of two or more separate but complementary parts.

10. A compression fitting (2, 30) in which an insert according to any of claims 1-9 is provided.

11. An assembly comprising a first fluid conduit (10, 32) and a second fluid conduit (12, 42), a compression fitting (2, 30) comprising first and second compression-inducing parts (18, 6 and 8, 20, or 34, 44) being provided on respective first and second fluid conduits, and an insert according to any of claims 1-9 compressively clamped therewithin.

## Patentansprüche

1. Einsatz (80) für eine Klemmringverschraubung (2, 30) zwischen einer ersten Fluidleitung (10, 32) und einer zweiten Fluidleitung (12, 42), die Klemmringverschraubung umfassend mindestens erste und zweite kompressionsinduzierende Teile (18, 6 und 8, 20 oder 34, 44), die jeweils mit der ersten und der zweiten Fluidleitung zusammenwirken oder als Teil davon bereitgestellt sind und sowohl die Leitungen miteinander verbinden als auch eine Kompression dazwischen induzieren, wobei die erste und die zweite Fluidleitung oder ihre jeweiligen kompressionsinduzierenden Teile mit ersten (34A, 348) bzw. zweiten (74, 74A) Kontaktflächen versehen sind, die im Inneren der Klemmringverschraubung angeordnet sind, wenn die Leitungen miteinander verbunden sind, und die Öffnungen der fluidführenden Bohrungen der ersten bzw. der zweiten Fluidleitung definieren, wobei der Einsatz bemessen ist, um in der Lage zu sein, vollständig innerhalb der Klemmringverschraubung aufgenommen zu werden und von einer generell komplementären Querschnittsform zu derjenigen der Fluidleitungskontaktflächen zu sein, wobei der Einsatz einen Körper aufweist, der eine Bohrung (85) durch den Einsatz umgibt und definiert, die im Gebrauch im Wesentlichen mit den Bohrungen der Leitungen ausgerichtet ist, wobei der Körper mit einem Flansch (82) aus einem Material versehen ist oder im Wesentlichen aus einem solchen besteht, der angepasst ist, um innerhalb der Klemmringverschraubung zwischen der ersten und der zweiten Kontaktfläche eingeklemmt zu werden, **dadurch gekennzeichnet, dass**
der Einsatz aus einem nicht-elastischen Material gebildet ist und mit mindestens einer ersten (828) und einer zweiten (82D) Sitzfläche versehen ist, wobei die erste Sitzfläche auf einer inneren Seite des Flanschs und die zweite Sitzfläche auf einer anderen äußeren Seite davon bereitgestellt ist, wobei jede der Sitzflächen in Bezug auf eine Längsachse des Einsatzes geneigt und angeordnet ist, sodass die erste und die zweite Kontaktfläche mit einer jeweiligen einen von der ersten und der zweiten Sitzfläche an einem ersten und einem zweiten Kontaktbereich in Kontakt kommen, wenn die Klemmringverschraubung angezogen wird, wobei der Einsatz darin in einem Ausmaß zusammengedrückt wird, dass auf einer Seite mindestens eines Kontaktbereichs das Ausmaß der Verformung (90A) des Einsatzes infolge des auf ihn ausgeübten Drucks sich von der Verformung (90B) unterscheidet, die auf der anderen Seite des Kontaktbereichs auftritt, wobei jeder der Kontaktbereiche durchgängig ist, um vollständige Fluidabdichtungen auf jeder der Sitzflächen zu erzeugen.

2. Einsatz (80) gemäß Anspruch 1, **dadurch gekennzeichnet, dass** der Einsatz mit mindestens einem Halsabschnitt (84) versehen ist, der sich im Wesentlichen in Längsrichtung des Einsatzes und auf einer oder beiden Seiten des Einsatzflanschs (82) erstreckt, wobei der Halsabschnitt mindestens teilweise die Bohrung (85) durch sein Inneres hindurch definiert und die Außenabmessungen des Halsabschnitts geringer sind als jene des Flanschs, an dem der Halsabschnitt angebracht ist oder mit dem er einstückig gebildet ist.

3. Einsatz (80) gemäß Anspruch 2, **dadurch gekennzeichnet, dass** die Querschnittsform des Halsabschnitts (84) komplementär zu jener von einer der ersten (10, 32) und zweiten (12, 42) Fluidleitungen ist und die Abmessungen davon geringfügig kleiner als jene der Fluidleitung sind, sodass der Halsabschnitt in der Lage ist, in einer entsprechenden der Fluidleitungen aufgenommen zu werden.

4. Einsatz (80) gemäß einem der vorherigen Ansprüche, **dadurch gekennzeichnet, dass** die zweite Sitzfläche (82D) als Teil des Flanschs (82) bereitgestellt ist, indem der Flansch einen stumpfförmigen oder kegelstumpfförmigen Abschnitt beinhaltet, der geneigte Seiten aufweist, die die zweite Sitzfläche des Einsatzes bilden.

5. Einsatz (80) gemäß einem der vorherigen Ansprüche, **dadurch gekennzeichnet, dass** die Gesamtquerschnittsform des Einsatzes im Wesentlichen ringförmig ist.

6. Einsatz (80) gemäß einem der vorherigen Ansprüche, **dadurch gekennzeichnet, dass** das Material, aus dem der Einsatz gebildet ist, PTFE ist.

7. Einsatz (80) gemäß einem der vorherigen Ansprüche, **dadurch gekennzeichnet, dass** die äußere radiale oder diametrale Abmessung des Flanschs (82) des Einsatzes in der Größenordnung von 1 mm kleiner ist als die entsprechende innere radiale oder diametrale Abmessung des jeweiligen kompressionsinduzierenden Teils (44, 44B) der Klemmringverschraubung, in dem der Einsatz angepasst ist, um aufgenommen zu werden kann, und angeordnet ist, sodass der Flansch des Einsatzes innerhalb des kompressionsinduzierenden Teils aufgenommen wird, wobei das Spiel in der Größenordnung von 1 mm ist.

8. Einsatz (80) gemäß einem der vorherigen Ansprüche, **dadurch gekennzeichnet, dass** eine der Fluidleitungen (10, 32 oder 12, 42) oder ihr jeweiliges, eine kompressionsinduzierendes Teil (18, 6 und 8, 20 oder 34, 44) eine Öffnung definiert, die zu einem Hohlraum führt, in dem der Einsatz und insbesondere dessen Flansch (82) mit einem kleinen Spiel aufgenommen werden kann, wobei das Spiel geringer ist als die maximale Querausdehnung, die der Flansch erfährt, wenn er innerhalb der Klemmringverschraubung nach einem bestimmten vorbestimmten Grad des Festziehens zusammengedrückt wird, sodass eines von einem äußeren Rand oder einer äußeren Fläche des Flanschs mit einer inneren Fläche oder einem inneren Rand des Hohlraums in Kontakt kommt und gegen diese wirksam abgedichtet ist.

9. Einsatz (80) gemäß einem der vorherigen Ansprüche, der eines mehr von Folgenden ist:
- von einheitlicher Bauweise, optional umfassend gespreizte Schenkel,
- bestehend aus zwei oder mehreren separaten, aber komplementären Teilen.

10. Klemmringverschraubung (2, 30), bei der ein Einsatz gemäß einem der Ansprüche 1-9 bereitgestellt ist.

11. Anordnung, umfassend eine erste Fluidleitung (10, 32) und eine zweite Fluidleitung (12, 42), eine Klemmringverschraubung (2, 30), die erste und zweite kompressionsinduzierende Teile (18, 6 und 8, 20 oder 34, 44) aufweist, die an einer ersten bzw. zweiten Fluidleitung bereitgestellt sind, und einen Einsatz gemäß einem der Ansprüche 1 bis 9, der zusammengedrückt darin eingespannt ist.

## Revendications

1. Insert (80) destiné à un raccord de compression (2, 30) entre un premier conduit de fluide (10, 32) et un second conduit de fluide (12, 42) ledit raccord de compression comprenant au moins de première et seconde parties induisant une compression (18, 6 et 8, 20, ou 34, 44) coopérant respectivement avec ou étant prévues comme partie desdits premier et second conduits de fluide et à la fois connectant lesdits conduits ensemble et induisant une compression entre eux, lesdits premier et second conduits de fluide ou leurs parties induisant une compression respectives étant pourvus d'une première (34A, 348) et d'une seconde (74, 74A) surfaces de contact respectivement qui sont disposées à l'intérieur du raccord de compression lorsque les conduits sont raccordés ensemble et qui définissent des ouvertures des alésages de transport de fluide des premier et second conduits de fluide respectivement, ledit insert étant dimensionné de manière à pouvoir être reçu entièrement à l'intérieur du raccord de compression et étant d'une forme en section transversale d'une façon générale complémentaire de celle desdites surfaces de contact du conduit de fluide, ledit insert présentant un corps qui entoure et définit un alésage (85) par l'intermédiaire de l'insert qui, lors de l'utilisation, est pratiquement aligné avec les alésages des conduits, ledit corps étant pourvu ou constitué essentiellement d'une bride (82) de matériau adapté à être serré à l'intérieur du raccord de compression entre lesdites première et seconde surfaces de contact, **caractérisé en ce que**
ledit insert est formé d'un matériau non auxétique et est pourvu d'au moins de première (828) et seconde (82D) surfaces d'appui, ladite première surface d'appui étant prévue sur un côté interne de ladite bride et ladite seconde surface d'appui étant prévue sur un autre côté externe de celle-ci, chacune desdites surfaces d'appui étant inclinée par rapport à un axe longitudinal de l'insert et agencée de sorte que les première et seconde surfaces de contact viennent en contact avec une surface respective des première et seconde surfaces d'appui au niveau des première et seconde régions de contact lorsque le raccord de compression est serré, ledit insert étant ainsi compressé dans celui-ci dans la mesure où, sur un côté d'au moins une région de contact, la mesure à laquelle l'insert se déforme (90A) résultant de la compression appliquée à celui-ci est différente de la déformation (90B) qui se produit de l'autre côté de ladite région de contact, chacune desdites régions de contact étant continue de manière à créer des joints étanches aux fluides complets sur chacune desdites surfaces d'appui.

2. Insert (80) selon la revendication 1, **caractérisé en ce que** l'insert est pourvu d'au moins une partie de col (84) s'étendant pratiquement longitudinalement dans le sens axial de l'insert et sur l'un ou les deux côtés de la bride d'insert (82) ladite partie de col définissant au moins partiellement ledit alésage (85) à l'intérieur par l'intermédiaire de celle-ci et les dimensions extérieures de ladite partie de col étant inférieures à celles de la bride à laquelle ladite partie de col est fixée ou avec laquelle elle fait partie intégrante.

3. Insert (80) selon la revendication 2, **caractérisé en ce que** la forme de la section transversale de la partie de col (84) est complémentaire de celle de l'un des premier (10, 32) et second (12, 42) conduits de fluide et ses dimensions sont légèrement inférieures à celles de ce conduit de fluide de sorte que la partie de col peut être reçue à l'intérieur d'un parmi lesdits conduits de fluide respectifs.

4. Insert (80) selon l'une quelconque des revendications précédentes, **caractérisé en ce que** la seconde surface d'appui (82D) est prévue en tant que partie de ladite bride (82) **en ce que** ladite bride comporte une partie de type tronconique, ou tronconique, présentant des côtés inclinés qui forment la seconde surface d'appui dudit insert.

5. Insert (80) selon l'une quelconque des revendications précédentes, **caractérisé en ce que** la forme globale de la section transversale de l'insert est sensiblement annulaire.

6. Insert (80) selon l'une quelconque des revendications précédentes, **caractérisé en ce que** le matériau dans lequel l'insert est formé est du PTFE.

7. Insert (80) selon l'une quelconque des revendications précédentes, **caractérisé en ce que** la dimension radiale ou diamétrale externe de la bride (82) de l'insert est de l'ordre de 1 mm inférieure à la dimension radiale ou diamétrale interne correspondante de la partie induisant une compression respective (44, 44B) dudit raccord de compression à l'intérieur duquel ledit insert est apte à être reçu et disposé de sorte que la bride dudit insert est reçue à l'intérieur de ladite partie induisant une compression avec un jeu de l'ordre de 1 mm.

8. Insert (80) selon l'une quelconque des revendications précédentes, **caractérisé en ce que** l'un des conduits de fluide (10, 32 ou 12, 42) ou sa partie induisant une compression respective (18, 6 et 8, 20, ou 34, 44) définit une ouverture menant à une cavité dans laquelle l'insert et en particulier sa bride (82) peuvent être reçus avec un faible jeu, ledit jeu étant inférieur à la dilatation transversale maximale que ladite bride subit lorsqu'elle est compressée à l'intérieur du raccord de compression après un certain degré prédéfini de serrage, de sorte qu'un bord ou une surface extérieure de ladite bride vient en contact avec une surface ou un bord intérieur de ladite cavité et est effectivement hermétiquement isolé contre celle-ci.

9. Insert (80) selon l'une quelconque des revendications précédentes, qui est l'une ou l'autre :
- de construction unitaire, comprenant éventuellement des membres chanfreinés,
- composé de deux ou d'au moins deux parties distinctes, mais complémentaires.

10. Raccord de compression (2, 30) dans lequel est prévu un insert selon l'une quelconque des revendications 1 à 9.

11. Ensemble comprenant un premier conduit de fluide (10, 32) et un second conduit de fluide (12, 42), un raccord de compression (2, 30) comprenant de première et seconde parties induisant une compression (18, 6 et 8, 20, ou 34, 44) étant prévu sur les premier et second conduits de fluide respectifs et un insert selon l'une quelconque des revendications 1 à 9 serré par compression à l'intérieur.
